(19) Europäisches Patentamt
European Patent Office
Office européen des brevets

(11) **EP 0 925 483 B1**

(12) **EUROPÄISCHE PATENTSCHRIFT**

(45) Veröffentlichungstag und Bekanntmachung des Hinweises auf die Patenterteilung:
**11.09.2002  Patentblatt 2002/37**

(51) Int Cl.$^7$: **G01C 22/02**, G01C 21/20, G01C 25/00

(21) Anmeldenummer: **97931639.5**

(22) Anmeldetag: **21.06.1997**

(86) Internationale Anmeldenummer:
**PCT/DE97/01296**

(87) Internationale Veröffentlichungsnummer:
**WO 98/012505 (26.03.1998 Gazette 1998/12)**

(54) **VERFAHREN ZUM AUTOMATISCHEN KALIBRIEREN EINES WEGSENSORS**

METHOD FOR AUTOMATIC CALIBRATION OF AN ODOMETER

PROCEDE POUR ETALONNER AUTOMATIQUEMENT UN ODOMETRE

(84) Benannte Vertragsstaaten:
**DE FR GB**

(30) Priorität: **16.09.1996  DE 19637616**

(43) Veröffentlichungstag der Anmeldung:
**30.06.1999  Patentblatt 1999/26**

(73) Patentinhaber: **ROBERT BOSCH GMBH**
**70442 Stuttgart (DE)**

(72) Erfinder: **KREFT, Peter**
**D-30539 Hannover (DE)**

(56) Entgegenhaltungen:
**WO-A-94/28435**

- **"ODOMETER CALIBRATION" RESEARCH DISCLOSURE, Nr. 364, Seite 448 XP000468978**

EP 0 925 483 B1

**Beschreibung**

Stand der Technik

Die Erfindung geht aus von einem Verfahren zum automatischen Kalibrieren eines Wegsensors nach der Gattung des Anspruchs 1. Es ist schon bekannt, beim einem Fahrzeug-Navigationssystem die Längenmessung eines Radsensors auf Basis einer bekannten Streckenlänge mittels Abfahren dieser Strecke zu kalibrieren. Dieses Kalibrierverfahren setzt jedoch voraus, daß bei Länge der Kalibrierstrecke exakt bekannt ist und exakt abgefahren wird (Start, Ziel), um den Längenmeßfehler möglichst gering zu halten. Dieses Verfahren ist nach der Neuinstallation des Navigationssystems im Fahrzeug oder beim Reifenwechsel (Wechsel von Sommerreifen auf Winterreifen oder bei Neureifen) erforderlich. Es ist daher erforderlich, die Längenmessung des Wegsensors in oben beschriebenen Situationen in der Werkstatt kalibrieren zu lassen.

Aus der Schrift "Odometer Calibration", Research Disclosure XP 000 46 89 78, ist ein Navigationssystem bekannt, bei der die Umdrehungszahl der Räder zur Bestimmung der zurückgelegten Strecke ausgewertet wird. Die zurückgelegte Entfernung wird durch eine Multiplikation eines Kalibrierungsfaktors mit der Anzahl der Radumdrehungen bestimmt, wobei der Kalibrierungsfaktor von dem Radumfang abhängt. Der Kalibrierungsfaktor wird z.B. über die zurückgelegte Strecke oder über einen Vergleich einer gefahrenen Geschwindigkeit mit einer Sollgeschwindigkeit bestimmt.

Vorteile der Erfindung

Das erfindungsgemäße Verfahren zum automatischen Kalibrieren eines Wegsensors mit den kennzeichnenden Merkmalen des Anspruchs 1 hat demgegenüber den Vorteil, daß durch die automatische Kalibrierung des Wegsensors, beispielsweise bei einem Reifenwechsel, das aufwendige manuelle Kalibrieren entfällt. Dadurch werden Kosten eingespart.

Besonders vorteilhaft ist weiterhin, daß unabhängig von der Fahrzeugbelastung oder dem Reifendruck u.ä. der Wegsensor stets optimal kalibriert ist. Dadurch wird vorteilhaft die Koppel-Ortung zuverlässiger.

Besonders vorteilhaft ist, daß aus empfangenen Satellitensignalen, beispielsweise wie sie von dem GPS-System gesendet werden, die Fahrzeuggeschwindigkeit ermittelt werden kann. Bei gegebener Geschwindigkeit legt das Fahrzeug innerhalb einer vorgegebenen Zeitspanne einen definierten Weg zurück. Die Geschwindigkeit kann dabei vorteilhaft mit dem bekannten Doppler-Effekt gemessen werden. Aus der Geschwindigkeit läßt sich dann die zurückgelegte Wegstrecke berechnen.

Durch die in den abhängigen Ansprüchen ausgeführten Maßnahmen sind vorteilhafte Weiterbildungen und Verbesserungen des im Hauptanspruch angegebenen Verfahrens möglich. Auch wenn die GPS-Informationen einen gewissen Fehler beinhalten, so ist es doch möglich, mit einfachen Rechenverfahren diesen systematischen Fehler zu eliminieren. Besonders günstig ist, aus einer Vielzahl von Messungen den Mittelwert zu ermitteln und dabei solche Werte auszuschließen, die außerhalb eines vorgegebenen Streubereiches liegen. Vorteilhaft erscheint dabei, die Standardabweichung $\sigma$ zugrunde zu legen.

Mit Hilfe des Mittelwertes und der Standardabweichung $\sigma$ kann die Längenmessung eines induktiven Radsensors oder eines Signals vom Tachometergeber mit einer vorgegebenen Genauigkeit kalibriert werden.

Zeichnungen

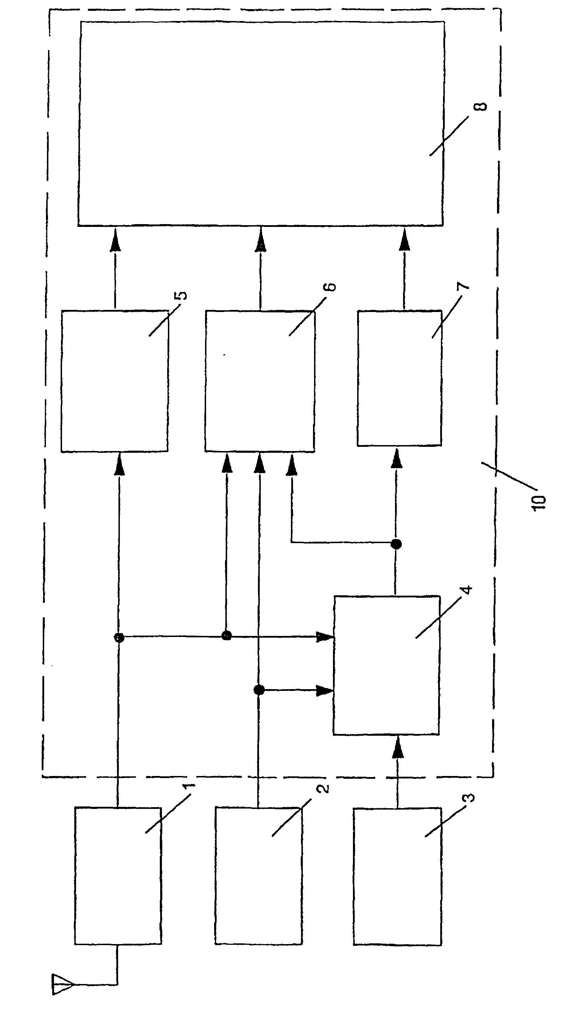

Ein Ausführungsbeispiel der Erfindung ist in der Zeichnung dargestellt und in der nachfolgenden Beschreibung näher erläutert. Figur 1 zeigt ein Blockschaltbild eines Ausführungsbeispiels.

Beschreibung der Erfindung

Figur 1 zeigt ein Blockschaltbild eines Ausführungsbeispiels der Erfindung, an dem die Funktion näher erläutert wird. Dieses Blockschaltbild kann ein Teil eines auf der Basis einer digitalen Karte gestützten Ortungssystems 10 sein, bei dem die aktuelle Fahrzeugposition in Abhängigkeit von der zurückgelegten Wegstrecke und Fahrtrichtung ermittelt und auf einer digitalen Karte angezeigt wird. Das Ortungssystem 10 ist beispielsweise mit einem Funkempfänger 1 ausgestattet. Vorzugsweise ist der Funkempfänger 1 als Satellitenempfänger ausgebildet und empfängt die Signale der Satelliten des Global Positioning System (GPS). Selbstverständlich sind auch andere Satellitensysteme, z.B. Glonass, verwendbar.

Prinzipiell sollte die Genauigkeit für die Längenmessung, d.h. für die zurückgelegte Wegstrecke, sehr hoch sein. Angestrebt wird ein Fehler beispielsweise kleiner als 0,5 %, um vor allem bei Zielführungssystemen die erforderlichen Fahranweisungen zum richtigen Zeitpunkt an den Fahrer ausgeben zu können. Dabei ergibt sich jedoch das Problem, daß die Genauigkeit der Signale der GPS-Satelliten nicht direkt für die Kalibrierung des Wegsensors, beispielsweise eines induktiven Radsensors, ausreicht, da der GPS-Betreiber (Department of Defence) die Signale künstlich verschlechtert hat. Ohne diese künstliche Verschlechterung könnte beispielsweise mit Hilfe des Doppler-Effektes die Genauigkeit der Fahrzeuggeschwindigkeit im Bereich von 0,1 bis 0,2 m/s (doppelte Standardabweichung 2σ) bestimmt werden. Selbst dieser Wert ist aber für eine Genauigkeitsanforderung < 0,5% noch zu ungenau. Denn bei einer angenommenen Geschwindigkeit von 50 km/h (ensprechend 13,9 m/s) würde sich bereits ein Fehler von 1,44% ergeben. Dieser Fehler wird durch die künstliche Verschlechterung der Signale, der jeder zivile GPS-Anwender unterliegt, noch vergrößert. Ein weiterer Fehlerfaktor ist eine ungenaue oder fehlende Synchronisation zwischen dem GPS-Meßzeitpunkt und der Aufzeichnung der Sensorsignale bei nicht konstanter Fahrzeuggeschwindigkeit während der Meßzeit. Somit ergibt sich eine Gesamtungenauigkeit, die für die Kalibrierung des Wegsensors 3 zunächst ungeeignet erscheint.

Mit Hilfe der Erfindung können dennoch die GPS-Signale zur Kalibrierung des Wegsensors 3 verwendet werden. Es wird angenommen, daß die Kalibriergröße des Wegsensors 3 mit Hilfe der Formel

$$\frac{\text{gefahrene Strecke}}{\text{Sensorsignal}} = \frac{\text{GPS - Meßgeschwindigkeit x Zeit}}{\text{Sensorsignale}}$$

berechnet werden kann, wobei 'Zeit' die Aufnahmezeit der Sensorsignale bedeutet. Soll beispielsweise ein Meßrad kalibriert werden, das als Sensorsignal m Pulse pro Umdrehung liefert, so lautet die Einheit der gewünschten Kalibriergröße 'Strecke/Puls'.

Erfindungsgemäß wird vorgeschlagen, zur Längenkalibrierung des Wegsensors 3 die Geschwindigkeitsmessungen mit Hilfe der Satellitensignale und des Doppler-Effekts wiederholt durchzuführen und die einzelnen Meßwerte für die Kalibriergröße xi zu ermitteln, wobei i eine laufende Zahl 1...n ist. Als Mittelwert ergibt sich dann für die Kalibriergröße x gemäß der Formel:

$$x = \frac{x_1 + x_2 + x_3 + ...+ x_n}{n}$$

Die Standardabweichung der Meßwerte sinkt dann bei n Messungen und angenommener gleicher Streuung aller Messungen auf

$$\sigma = \sigma i / \sqrt{n}$$

Beispielsweise beträgt bei n = 100 Messungen das Streumaß des Mittelwertes demnach nur noch 1/10 der Streuung der Einzelwerte.

Ist das Streumaß aller Meßwerte nicht identisch, so kann eine Wichtung der Messungen durchgeführt werden. Ein Maß für die Genauigkeit der jeweils berechneten Kalibriergröße (Strecke/Puls) ist der sogenannte GDOP (Geometric Dilution Of Precision), der die Zeitfehler und die Satellitengeometrie berücksichtigt. Bei fehlender Synchronisation der GPS-Geschwindigkeitsmessung mit den Sensorsignalen, kann eine Abschätzung der Konstanz der Fahrzeuggeschwindigkeit getroffen werden (Stabilität der Anzahl der Sensorsignale pro Zeit). Je konstanter die Fahrzeuggeschwindigkeit, desto geringer ist der Einfluß fehlender Synchronisation. Auch die Höhe der Fahrzeuggeschwindigkeit hat erheblichen Einfluß auf den relativen Fehler der Streckenmessung über GPS.

Nach bekannten Verfahren der Mathematik zum Ausgleich von Messungen verschiedener Genauigkeit erhält jeder Meßwert einen Gewichtungsfaktor p. Dabei verhalten sich die Gewichte umgekehrt proportional wie die Quadrate der mittleren Fehler (Streuung):

$$\frac{p_2}{p_1} = \frac{\sigma_1^2}{\sigma_2^2}$$

Somit können die Wichtungsfaktoren p1, p2 ... pn auf einfache Weise automatisch berechnet werden. Für einen beliebigen Meßwert (z.B. $x_1$) kann das Gewicht $p_1 = 1$ gesetzt werden, da die Gewichte nur Verhältniszahlen sind. Die übrigen Gewichte folgen aus obiger Formel. Mit den bekannten Gewichten wird das arithmetische Mittel unter Berücksichtigung der Gewichtungsfaktoren gebildet. Es ergibt sich als Kalibriergröße x:

$$x = \frac{p_1 \cdot x_1 + p_2 \cdot x_2 + \dots p_n \cdot x_n}{p_1 + p_2 + \dots p_n}$$

Nach obigem Beispiel ist der Meßwert $x_1$ mit dem Gewicht $p_1 = 1$ die Gewichtseinheit. Daraus folgt für den mittleren Fehler (Standardabweichung, Streuung) des allgemeinen arithmetischen Mittels:

$$\sigma = \frac{\sigma_l}{\sqrt{p_l + p_2 \dots p_n}} = \frac{\sigma_l}{\sqrt{\sum_{i=1}^{i=n} p_i}}$$

Um die Streuung der mit Hilfe der GPS-Signale gewonnenen Geschwindigkeitsmessung zu verringern, wird die errechnete Fahrzeuggeschwindigkeit häufig im GPS-Empfänger geglättet (Smoothing-Filter). Um diesen Einfluß zu eliminieren, wenn sich das Fahrzeug tatsächlich nicht mit konstanter Geschwindigkeit bewegt, wird die Glättung (Filtervorgang) entweder rückgängig gemacht oder die Sensorsignale des Wegsensors werden in ähnlicher Weise gefiltert.

Im folgenden wird nun anhand des Ausführungsbeispiels der Figur 1 die Funktionsweise näher erläutert. Das Ortungssystem 10 ist mit dem Funkempfänger 1, vorzugsweise einem GPS-Empfänger, verbunden. Desweiteren ist eine Uhr 2 als Zeitgeber sowie wenigstens ein Wegsensor 3 vorgesehen. Sowohl der GPS-Empfänger 1 als auch der Wegsensor 3, der beispielsweise als induktiver Radsensor ausgebildet ist, sind per se bekannt. Das Ortungssystem 10 ist ebenfalls als solches bekannt und muß daher nicht näher erläutert werden. Es enthält alle wesentlichen Einheiten wie einen Rechner, ein Steuerprogramm, einen Arbeitsspeicher, einen Kartenspeicher für eine digitale Straßenkarte (CD-ROM), eine nicht dargestellte Eingabeeinheit sowie eine Ausgabeeinheit (Anzeige, Lautsprecher).

Aus den von dem Satellitenempfänger 1 empfangenen Signalen wird die Geschwindigkeit des Fahrzeugs innerhalb einer definierten Meßzeit berechnet. Durch Multiplikation der Geschwindigkeit mit der Meßzeit wird die vom Fahrzeug zurückgelegte Wegstrecke berechnet (Figur 1, Position 5). Andererseits werden in Position 4 die Signale des Wegsensors 3 gezählt und mit Zeitbezug gespeichert. Mit Hilfe der Uhr 2 und des Empfangsstatus des Satellitenempfängers 1 werden die Signale des Wegsensors mit denen des Satellitenempfängers 1 synchronisiert und zwischengespeichert. In Position 7 werden die Signale des Wegsensors 3 zusätzlich äquivalent zu den vom Satellitenempfänger 1 mit einem Smoothing-Filter gefiltert, so daß diese Signale analog zu den Signalen des GPS-Empfängers 1 bearbeitet werden (Vergleichbarkeit wiederhergestellt). Die gefilterten Wegsignale des Wegsensors 3 stehen zu einer weiteren Verarbeitung zur Verfügung.

In Position 6 wird nun für die vom Satellitenempfänger 1 berechnete Fahrzeuggeschwindigkeit, das geschätzte Streumaß $\sigma$ und der wichtungsfaktor p für die Mittelwertbildung der Einzelwerte berechnet. Das Streumaß der mit Hilfe des Satellitenempfängers 1 berechneten Streckenmessung wird unter Zuhilfenahme der GDOP, der absoluten Fahrzeuggeschwindigkeit und der Stabilität der Fahrzeuggeschwindigkeit berechnet und geschätzt. Dabei wird die Stabilität der Fahrzeuggeschwindigkeit mit Hilfe der Signale des Wegsensors 3 dadurch ermittelt, daß die Impulse pro Zeiteinheit gezählt werden. In einem Speicher wird hier das gewählte Verhältnis zwischen der Streuung und dem Gewichtungsfaktor für die Ermittlung der jeweils aktuellen Gewichtungsfaktoren gespeichert ($\sigma$ bei $p = 1$). Die berechneten werte für die Fahrtstrecke gemäß der Position 5, der Streuung und Wichtung gemäß der Position 6 und der synchronisierten und gefilterten Wegsignale gemäß der Position 7 werden in Position 8 derart weiterverarbeitet, daß sich mit fortlaufen der Messung ein statistisch optimierter Kalibrierwert sowie die Standardabweichurig berechnen läßt. Die Berechnung erfolgt nach dem Schema, wie sie zuvor beschrieben wurde. Durch die Berücksichtigung der Streuwerte erhält man aus der Vielzahl der Satelliten-Doppler-Messungen einen sehr genauen Wert für die zurückgelegte Fahrtstrecke pro Radsensor-Puls. Das Navigationssystem ist dadurch in der Lage, vollautomatisch, d.h. ohne manuelles Kalibrieren mit Hilfe einer Kalibrierstrecke, einen Wegsensor zu kalibrieren.

Da das Ortungssystem 10 bereits einen Rechner enthält, sind die Positionen 4 bis 8 vorzugsweise in Form von entsprechenden Softwareroutinen ausgebildet.

**Patentansprüche**

1. Verfahren zum automatischen Kalibrieren eines Wegsensors eines Fahrzeugs, bei dem die Signale des Wegsensors gezählt werden, die einen zurückgelegten Fahrweg repräsentieren, und diese Signale mit Geschwindigkeiten des Fahrzeugs in Bezug gesetzt und verglichen werden, die über den Empfang von Funksignalen, vorzugsweise des GPS-Systems, fortlaufend ermittelt werden, **dadurch gekennzeichnet, daß** die Geschwindigkeit des Fahrzeugs über den Dopplereffekt ermittelt wird, daß die Signale des Wegsensors jeweils für eine Folge von Zeitspannen gezählt werden, daß die über den Dopplereffekt ermittelten Geschwindigkeiten jeweils den vorgegebenen Zeitspannen zugeordnet werden, daß aus den Produkten der über den Dopplereffekt ermittelten Geschwindigkeiten mit den jeweils zugeordneten Zeitspannen und der in der jeweiligen Zeitspanne ermittelten Anzahl von Signalen des Wegsensors Quotienten ($x_i$) gebildet werden, daß jeder Quotient ($x_i$) mit einem Gewichtungsfaktor ($p_i$) multipliziert wird und daß ein aus diesen Produkten bestimmter Mittelwert (x) für die Kalibrierung des Wegsensors verwendet wird (i=1,...,n).

2. Verfahren nach Anspruch 1, **dadurch gekennzeichnet, daß** jedem Quotienten ($x_i$) ein Gewichtungsfaktor ($p_i$) zugeordnet wird, der jeweils von dem mittleren Fehler des Quotienten ($x_i$) abhängt.

3. Verfahren nach einem der vorhergehenden Ansprüche, **dadurch gekennzeichnet, daß** die Gewichtungsfaktoren ($p_i$) iterativ berechnet werden, wobei einem der Gewichtungsfaktoren (z.B. $p_1$) ein fester Wert, vorzugsweise 1, zugewiesen wird.

4. Verfahren nach Anspruch 3, **dadurch gekennzeichnet, daß** ein Verhältnis zweier Gewichtungsfaktoren ($p_k$, $p_j$) aus dem reziproken Verhältnis der Quadrate der mittleren Fehler der Quotienten ($x_k$, $x_j$), denen die Gewichtungsfaktoren jeweils zugeordnet sind, berechnet wird (k=1,2,...,n; j=1,2,...,n).

5. Verfahren nach einem der vorhergehenden Ansprüche, **dadurch gekennzeichnet, daß** der Mittelwert(x), der für die Kalibrierung des Wegsensors verwendet wird, durch eine arithmetische Mittelung der gewichteten Quotienten ($p_1 \cdot x_2$, $p_2 \cdot x_2$, ..., $p_n \cdot x_n$) berechnet wird.

## Claims

1. Method for automatically calibrating a displacement sensor of a vehicle, in which the signals of the displacement sensor representing a distance travelled are counted, and said signals are related to and compared with speeds of the vehicle which are determined continuously by means of the reception of radio signals, preferably of the GPS system, **characterized in that** the speed of the vehicle is determined by means of the Doppler effect, **in that** the signals of the displacement sensor are counted in each case for a series of time periods, **in that** the speeds determined by means of the Doppler effect are assigned in each case to the predetermined time periods, **in that** quotients ($x_i$) are created from the products of the speeds determined by means of the Doppler effect with the assigned time periods in each case and the number of signals of the displacement sensor determined during the respective time period, **in that** each quotient ($x_i$) is multiplied by a weighting factor ($p_i$), and **in that** a mean value (x) determined from said products is used to calibrate the displacement sensor (i=1,...,n).

2. Method according to Claim 1, **characterized in that** assigned to each quotient ($x_i$) is a weighting factor ($p_i$) which depends on the mean error of the quotient ($x_i$) in each case.

3. Method according to one of the preceding claims, **characterized in that** the weighting factors ($p_i$) are calculated iteratively, with a fixed value, preferably 1, being assigned to one of the weighting factors (e.g. $p_i$).

4. Method according to Claim 3, **characterized in that** a ratio of two weighting factors ($p_k$, $p_j$) is calculated (k=1,2,..., n; j=1,2,...,n) from the reciprocal ratio of the squares of the mean errors of the quotients ($x_k$, $x_j$) to which the weighting factors are assigned in each case.

5. Method according to one of the preceding claims, **characterized in that** the mean value (x) which is used for calibrating the displacement sensor is calculated by arithmetically averaging the weighted quotients ($p_1 \cdot x_2$, $p_2 \cdot x_2$, ..., $p_n \cdot x_n$).

## Revendications

1. Procédé d'étalonnage automatique d'un odomètre de véhicule selon lequel on compte les signaux de l'odomètre représentant un trajet parcouru et on met ces signaux en relation avec des vitesses du véhicule et on compare, on forme en continu la moyenne des signaux radio reçus de préférence du système GPS,
**caractérisé en ce que**

- on forme la moyenne de la vitesse du véhicule par effet Doppler,
- on compte les signaux de l'odomètre chaque fois pour une succession d'intervalles de temps,
- on associe aux vitesses obtenues par effet Doppler à chaque fois des intervalles de temps prédéterminés,
- à partir des produits des vitesses obtenues par effet Doppler et des durées associées et du nombre de signaux de l'odomètre pour chaque intervalle de temps, on forme des quotients ($x_i$),
- on multiplie chaque quotient ($x_i$) avec un coefficient de pondération ($p_i$) et
- on utilise une valeur moyenne (x) déterminée à partir de ces produits pour calibrer l'odomètre (i = 1 ... n).

2. Procédé selon la revendication 1,
**caractérisé en ce qu'**
on associe à chaque quotient ($x_i$) un coefficient de pondération ($p_1$) qui dépend chaque fois de l'erreur moyenne du quotient ($x_i$).

3. Procédé selon l'une des revendications précédentes,
**caractérisé en ce qu'**
on calcule les coefficients de pondération ($p_1$) par itération et on attribue à l'un des coefficients de pondération (par exemple p1) une valeur fixe notamment 1.

4. Procédé selon la revendication 3,
**caractérisé en ce qu'**
on calcule (k = 1, 2, ... n ; j = 1, 2 ... n) un rapport de deux coefficients de pondération ($p_k$, $p_j$) à partir du rapport réciproque des carrés des erreurs moyennes des quotients ($x_k$, $x_j$) auxquels on associe des coefficients de pondération.

5. Procédé selon l'une des revendications précédentes,
**caractérisé en ce qu'**
on calcule la valeur moyenne (x) utilisée pour l'étalonnage de l'odomètre en faisant la moyenne arithmétique des quotients pondérés ($p_1.x_1$ ; $p_2.x_2$ ...$p_n.x_n$).